# EUROPÄISCHE PATENTANMELDUNG

(11) **EP 2 226 543 A2**
(43) Veröffentlichungstag der Anmeldung: **08.09.2010**
(21) Anmeldenummer: 10155230.5
(22) Anmeldetag: 02.03.2010
(51) Int. Cl.: F16L 9/133, F16L 11/12

(54) **Kunststoffrohr mit strukturierter Außenschicht**

(30) Priorität: 06.03.2009 DE 102009011514
(71) Anmelder: egeplast Werner Strumann GmbH & Co. KG, 48268 Greven (DE)
(72) Erfinder: Hesse, Holger, 48268, Greven (DE)
(74) Vertreter: Fritz, Edmund Lothar

(57) **Zusammenfassung**

Die vorliegende Erfindung betrifft ein Kunststoffrohr (10) insbesondere für eine grabenlose Verlegung im Erdreich, welches eine strukturierte äußere Oberfläche (13 a) aufweist. Aufgabe der vorliegenden Erfindung ist es ein Kunststoffrohr mit strukturierter äußerer Oberfläche zur Verfügung zu stellen, welches bei der grabenlosen Verlegung im Erdreich eine geringere Reibkraft aufweist als herkömmliche Rohre. Dies wird erfindungsgemäß dadurch gelöst, dass die Mantelschicht (13) des Rohrs an ihrer äußeren Oberfläche Strukturelemente aufweist, die den Reibungskoeffizienten verringern. Dies können beispielsweise muldenartige Vertiefungen (14) oder Dellen sein oder auch Strukturen, die eine Anlehnung in der Natur finden wie zum Beispiel eine Haifischhaut oder Schuppenstrukturen bei Reptilien oder dergleichen.

## Beschreibung

Die vorliegende Erfindung betrifft ein Kunststoffrohr, insbesondere für die grabenlose Verlegung im Erdreich, welches eine strukturierte äußere Oberfläche aufweist.

Es sind aus dem Stand der Technik strukturierte Rohre in Form von Wellrohren hinlänglich bekannt. Es wird beispielsweise auf die DE 20 2004 019 464 U1verwiesen. Diese Wellrohre werden unter anderem auch im Abwasserbereich eingesetzt, wobei es bei den dortigen Anwendungen auf die spezifischen Eigenschaften eines Wellrohrs ankommt, insbesondere dessen Flexibilität. Wellrohre haben jedoch herstellungsbedingt typischerweise nicht nur an der äußeren Oberfläche sondern auch innenseitig eine gewellte Struktur. Würde man ein Wellrohr bei einer grabenlosen Verlegung in das Erdreich einziehen, wäre, da sich die Wellen quer zur Einzugsrichtung erstrecken, der Einzugswiderstand größer als bei einem glatten Rohr.

Kunststoffrohre für unterirdische Rohrleitungen werden heute zunehmend durch grabenlose Verlegung in das Erdreich eingebracht, da es sich hier um ein kostengünstiges Verfahren mit kürzerer Verlegezeit handelt. Es ist aus dem Stand der Technik hinlänglich bekannt (siehe beispielsweise DE 203 05 112 U1) thermoplastische Rohre mit zusätzlichem Schutzmantel aus Kunststoff wie beispielsweise einem Polyolefin für die grabenlose Verlegung zu verwenden. Ziel der additiven Verschleissschicht der Rohrleitungen ist der Schutz der drucktragenden Rohrleitung vor unzulässigen Beschädigungen durch Riefen, Kratzer und flächigen Abtragungen während der grabenlosen Verlegeverfahren. Allen grabenlosen Verlegeverfahren ist gemein, dass der zu verlegende Rohrstrang durch das Erdreich gezogen wird.

Die maximale grabenlos verlegbare Rohrlänge ist direkt proportional zu der bei der Verlegung entstehenden Reibkraft, die Grenze wird dabei von der maximal zulässigen Zugkraft der Rohrleitung gesetzt. Erreicht man eine Reduzierung der durch Reibung entstehenden Kraft, verlängert sich damit die maximal verlegbare Rohrlänge und bewirkt damit eine Optimierung des Verlegeverfahrens.

Stand der Technik ist, dass der Schutzmantel eine glatte, unstrukurierte Form aufweist.

In der US 5,060,697 A wird ein Schlauch beschrieben, der an seiner äußeren Oberfläche radial nach außen gerichtete Rippen aufweist, die aus einem chlorierten Polyethylen bestehen, welches weicher ist als das Rohrmaterial, so dass die Rippen eine gewisse Flexibilität aufweisen. Diese Rippen haben die Aufgabe, die schalldämpfenden Eigenschaften des Rohres zu verbessern. Es handelt sich hier zudem nicht um ein Rohr, welches zur Verlegung im Erdreich bestimmt ist, sondern vielmehr dient dieses als Belüftungs- oder Drainagerohr in einem Kraftfahrzeug und wird in einem Hohlraum des Fahrzeugs verlegt.

In der US 5,713,392 A wird eine Umhüllung für im Erdreich verlegte Rohre wie Pipelines oder dergleichen beschrieben, die eine Verringerung des Reibungskoeffizienten herbeiführen soll. Ein aus Stahl bestehendes Kernrohr wird zunächst mit einer Schicht aus einem Polymeren beschichtet. Danach wird ein Netz aus einem polymeren Geotextil um das Rohr gewickelt. Diese Netzschicht wird dann jedoch durch Umwickeln mit einer weiteren Schicht aus einem Geotextil umwickelt, so dass sich wieder eine glatte Oberfläche ergibt. Dieses äußere Geotextil ist porös und durchlässig, so dass Feuchtigkeit aus dem Erdreich in die Umhüllung des Rohrs eindringen kann. Diese Eigenschaft ist für eine im Erdreich verlegte Rohrleitung nachteilig, da damit Verwitterungsvorgänge gefördert werden, die der langfristigen mechanischen Beständigkeit der Rohrleitung entgegen wirken. In diesem Dokument geht es zudem um eine Herabsetzung des Reibungskoeffizienten zwischen einzelnen Schichten des mehrschichtigen Rohrs, insbesondere zwischen der Polymerschicht und der Netzschicht. Die innere Reibung zwischen diesen Schichten wird damit herabgesetzt, wodurch eine Verbesserung erzielt werden soll, wenn es bei der bereits verlegten Rohrleitung zu beispielsweise geologisch bedingten Bewegungen im die Rohrleitung umgebenden Erdreich kommt. Da diese Druckschrift lehrt, die Zwischenschicht mit der Netzstruktur wieder mit einer äußeren Geotextilschicht zu umwickeln und somit eine glatte äußere Oberfläche zu schaffen, führt diese Lehre von dem Gedanken der vorliegenden Erfindung weg. Dieser zielt darauf ab, eine äußere Schicht eines Kunststoffrohrs herzustellen, bei der diese Schicht selbst Strukturelemente an ihrer äußeren Oberfläche aufweist, wobei diese so gewählt sind, dass sie den Reibungskoeffizienten der äußeren Oberfläche bei einer Relativbewegung des Rohrs gegenüber der Umgebung, in die dieses eingebettet ist, insbesondere bei einer Relativbewegung in Rohrlängsrichtung, nicht erhöht, sondern verringert. Eine Erhöhung des Reibungskoeffizienten ist bei am äußeren Umfang radial vorstehenden Rippen oder anderen scharfkantigen Strukturelementen oder einer Wellstruktur der äußeren Oberfläche zu erwarten.

Nachteilig ist bei einem Rohr wie es aus der US 5,713,392 bekannt ist, weiterhin, dass der Herstellungsprozess vergleichsweise aufwändig ist, da er mehrere Wickelprozesse umfasst. Zum einen wird das Rohr mit dem Netz umwickelt und danach wird es erneut mit einem glatten Geotextil umwickelt. Derartige Wickelprozesse lassen sich nur schwer bei einer kontinuierlichen Fertigung einer quasi endlosen Rohrleitung verwirklichen.

Bei der aus der US 5,713,392 bekannten vorgenannten Rohrumhüllung wird zudem in erster Linie bezweckt, eine Stahlrohrleitung vor Bewegungen des umgebenden Erdreichs zu schützen. Dazu wird durch die Umhüllung quasi eine Trennschicht zwischen die Rohroberfläche und das Erdreich eingebracht. Diese Trennschicht wird durch mehrere umwickelte Lagen Geotextil erreicht, die untereinander einen geringeren Reibungskoeffizienten aufweisen, so dass die durch Erdbewegungen auftretenden Spannungen durch Lageverschiebung der äußeren Hülle der Rohrkonstruktion abgebaut werden. Für die Verlegung in einem grabenlosen Verfahren durch Vortrieb durch das Erdreich ist eine derartige Rohrleitung nicht geeignet, da die einzelnen Schichten der Umhüllung eine verringerte Haftung untereinander haben.

Hier setzt die vorliegende Erfindung ein. Die Aufgabe der vorliegenden Erfindung besteht darin, ein Kunststoffrohr mit strukturierter äußerer Oberfläche der eingangs genannten Gattung zur Verfügung zu stellen, welches bei der grabenlosen Verlegung eine geringere Reibkraft aufweist, den einschlägigen Normen entspricht, dauerhaft witterungsbeständig ist und sich mit verringertem Aufwand in einem kontinuierlichen industriellen Verfahren herstellen lässt.

Die Lösung dieser Aufgabe liefert ein Kunststoffrohr mit strukturierter äußerer Oberfläche der eingangs genannten Gattung mit den kennzeichnenden Merkmalen des Hauptanspruchs.

Erfindungsgemäß ist vorgesehen, dass das Kunststoffrohr an seiner äußeren Oberfläche den Reibungskoeffizienten verringernde Strukturelemente aufweist.

Eine mögliche Lösungsvariante im Rahmen der vorliegenden Erfindung sieht vor, dass die Strukturelemente an der äußeren Oberfläche muldenartige Vertiefungen umfassen. Diese Vertiefungen können beispielsweise einen runden, kreisförmigen oder einen polygonalen, insbesondere rechteckigen, fünfeckigen, sechseckigen oder rautenförmigen Umriss haben. Es kann sich beispielsweise um Dellen (dimples) handeln, so dass sich eine etwa golfballartige Oberflächenstruktur ergibt.

Es können aber beispielsweise auch an der äußeren Oberfläche als Strukturelemente abgerundete, nicht scharfkantige, insbesondere verhältnismäßig flache Erhebungen vorgesehen sein. Diese können auch zusätzlich zu den muldenartigen Vertiefungen vorgesehen sein.

Die erfindungsgemäße Lösung sieht insbesondere vor, dass die äußere Oberfläche des Kunststoffrohrs eine niedrigere Reibungszahl aufweist als eine glatte Kunststoffrohroberfläche aus dem gleichen Werkstoff.

Eine mögliche erfindungsgemäße Lösungsvariante sieht die Verwendung von schuppenartigen Strukturelementen vor. Das Kunststoffrohr kann auch an seiner äußeren Oberfläche beispielsweise Längsrillen aufweisen. Derartige Längsrillen können sich auch im Bereich einer schuppenartigen Oberflächenstruktur befinden, beispielsweise können die Schuppen selbst solche Längsrillen aufweisen.

Die innere Oberfläche eines erfindungsgemäßen Kunststoffrohrs ist bevorzugt glatt, womit sich dieses von einem Wellrohr unterscheidet. Die Erfindung kommt insbesondere zur Anwendung für Kunststoffrohre, die dem Transport flüssiger oder gasförmiger Medien dienen, beispielsweise Wasserrohre, Gasrohre, Abwasserrohre oder Rohre für den Transport von Kohlenwasserstoffen oder Chemikalien.

Die vorliegende Erfindung bezieht sich bevorzugt auf Kunststoffrohre oder Metall-/Kunststoff-Verbundrohre mit einer strukturierten äußeren Mantelschicht aus Kunststoff, die für den Außenbereich vorgesehen sind und somit im Erdreich verlegt werden.

Es kann sich um einschichtige Rohre oder zwei- oder mehrschichtige Rohre handeln. Bei einem zwei- oder mehrschichtigen Rohr kann ein beispielsweise extrudierter Rohrkern vorgesehen sein, der innen und außen glatt sein kann und auf den dann wenigstens eine außen strukturierte Außenschicht oder Mantelschicht aufgebracht wird. Die äußerste Schicht eines mehrschichtigen Rohrs ist dann an ihrer äußeren Oberfläche in der erfindungsgemäßen Weise strukturiert. Die Außenschicht oder Mantelschicht ist vorzugsweise eine Schutzschicht, die das Rohr bei der grabenlosen Verlegung im Erdreich gegen mechanische Einflüsse schützt. Die Außen- oder Mantelschicht kann insbesondere auf einen ein- oder mehrschichtigen Rohrkern aufextrudiert werden.

Das erfindungsgemäße Rohr kann bevorzugt wenigstens eine Schicht aus einem Polyolefin aufweisen oder teilweise oder auch vollständig aus Polyolefinen bestehen.

Weiterhin kann eine spezifische Oberflächenstruktur der erfindungsgemäßen Art zu einer Verbesserung der Rheologie im Bohrkanal bei Spülbohrungen sorgen. Bei diesem Verfahren wird ein Bohrkanal durch das Austragen des Erdreichs durch eine unter Überdruck austretende Bohremulsion (in der Regel Bentonit-Wasser-Gemisch) erstellt. Die Bohremulsion hat dabei die Funktion den Bohrkanal zu stabilisieren und gleichzeitig das Bohrklein aus dem Bohrkanal zu tragen. Hydraulische Widerstände an den Grenzflächen bewirken einen Druckverlust im Bohrkanal, der zur erfolgreichen Erstellung des Bohrkanals überwunden werden muss. Dies kann zur Folge haben, dass der notwendige Überdruck von dem anstehenden Erdreich nicht getragen werden kann und nachgibt. Es entsteht ein sogenannter "Ausbläser" der als Mangel oder Schaden betrachtet werden muss. Auch besteht die Gefahr, dass der Überdruck so hoch gewählt werden muss, dass die Druckfestigkeit des Rohrstrangs überschritten wird. Auch in diesem Fall muss von einem Schaden ausgegangen werden. Durch eine geeignete Oberflächenstruktur kann eine Reduzierung der Druckverluste erzielt werden, die zu einer Reduzierung des Überdrucks im Bohrkanal und damit zu einer Verbesserung der Sicherheit der Bohrmaßnahme führen kann.

Die Oberflächenstruktur der Rohrs kann verschiedene Ausführungen haben. Denkbar sind Dellenstrukturen vergleichbar der Oberfläche von Golfbällen, aber auch Rauten und Rechteck- oder Vieleckstrukturen. Möglich sind aber auch Strukturen, die ihre Anlehnung in der Natur finden, z.B. in der Struktur der Haifischhaut oder der Schuppenstruktur von Reptilien, als Beispiel sei hier der Apothekerskink oder auch Sandfisch genannt.

Eine wesentliche Vereinfachung im Fertigungsverfahren gegenüber dem oben zitierten Stand der Technik ergibt sich bei dem erfindungsgemäßen Kunststoffrohr dadurch, dass sich die äußere Mantelschicht mit den Strukturelementen an der äußeren Oberfläche beispielsweise auf einen Rohrkern aufextrudieren lässt. Alternativ ist auch beispielsweise eine Coextrusion möglich. Dies ermöglicht eine kontinuierliche Fertigung endloser Rohre und es ist kein Wickelvorgang notwendig. Alternativ sind auch Fertigungsmethoden denkbar, bei denen eine definierte Struktur in die äußere Mantelschicht eingebracht wird, indem in den noch warmen Kunststoff nach der Extrusion und vor dem Erhärten der Mantelschicht die Struktur durch mechanische Einwirkung eingebracht wird, beispielsweise durch Eindrücken von Vertiefungen in einer Art Prägevorgang oder dergleichen.

Der Rohrkern kann selbst aus zwei oder mehreren Schichten bestehen. Grundsätzlich kann auch eine der Schichten des Rohrs eine Metallschicht sein. Wenn hierin von "Kunststoffrohren" die Rede ist, so sind damit Rohre gemeint, deren tragende Schichten überwiegend aus Kunststoff bestehen, womit jedoch Kunststoff-Metall-Verbundrohre, das heißt Kunststoffrohre mit einzelnen Metallschichten mit umfasst sein sollen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 einen schematisch vereinfachte Ansicht eines Kunststoffrohrs gemäß einer möglichen beispielhaften Variante der vorliegenden Erfindung;
Figur 2 einen Längsschnitt durch ein Kunststoffrohr gemäß der in Figur 1 gezeigten Variante:

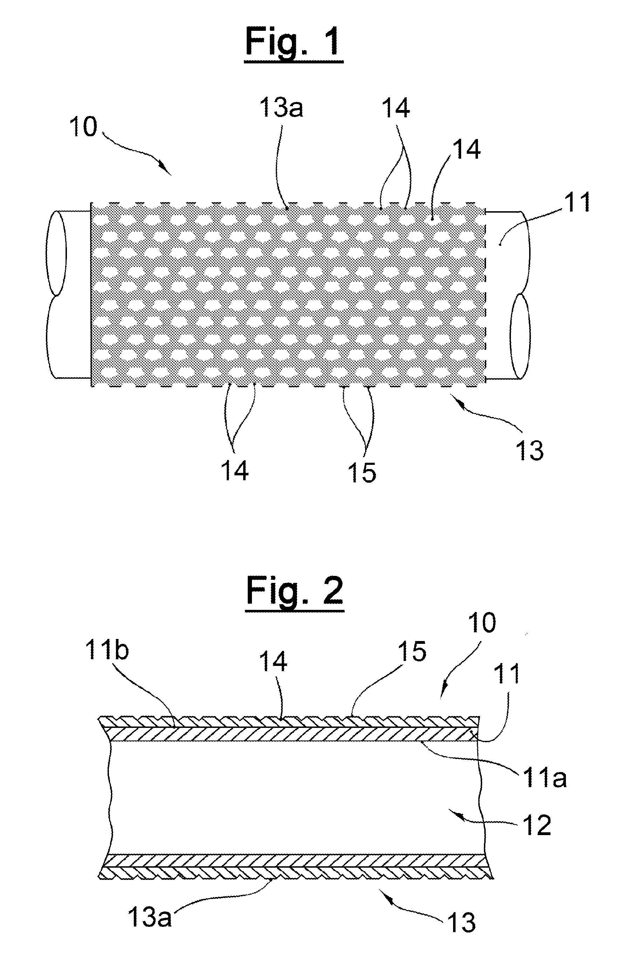

Nachfolgend wird auf die Ansicht gemäß Figur 1 und die Schnittdarstellung gemäß Figur 2 Bezug genommen. Diese zeigen ein mehrschichtiges Kunststoffrohr, welches insgesamt mit dem Bezugszeichen 10 bezeichnet ist. Dieses Kunststoffrohr 10 umfasst einen zylindrischen Rohrkern 11, der eine Innenschicht bildet, die an ihrer inneren Oberfläche 11 a glatt ist, so dass sich ein hohlzylindrischer freier Innenquerschnitt 12 ergibt, durch den ein Fluid wie zum Beispiel Gas, Wasser, Abwasser oder dergleichen transportiert wird.

Auf den auch an seiner zylindrischen Außenfläche 11 b glatten zylindrischen Rohrkern 11 wird eine Mantelschicht 13 oder Schutzschicht aufgebracht, beispielsweise durch Aufextrudieren. Diese Mantelschicht 13 geht eine stoffschlüssige Verbindung mit dem zylindrischen Rohrkern 11 ein, so dass sich insgesamt ein zweischichtiges innen zylindrisches Rohr ergibt mit einer tragenden Kernschicht und einem Schutzmantel, welcher wie man in der Zeichnung sieht, an seiner äußeren Oberfläche 13 a strukturiert ist. Diese äußere Oberfläche 13 a umfasst Strukturelemente in Form von muldenartigen Vertiefungen 14, zwischen denen jeweils abwechselnd erhöhte Bereiche 15 liegen, welche dem äußeren Durchmesser der Mantelschicht 13 entsprechen. In Figur 1 erkennt man, dass diese muldenartigen Vertiefungen 14 oder Dellen beispielsweise einen polygonalen (hier fünfeckigen) Umriss aufweisen.

Durch eine derartige strukturierte Oberfläche wird der beim Einziehen einer solchen Rohrleitung in das Erdreich entstehende Reibungswiderstand herabgesetzt, da die Rohroberfläche nicht mehr vollflächig mit dem sie umgebenden Erdreich in Kontakt kommt.

### Bezugszeichenliste

- 10: Kunststoffrohr
- 11: Rohrkern
- 11 a: glatte innere Oberfläche
- 11 b: zylindrische Außenfläche
- 12: freier Innenquerschnitt
- 13: Mantelschicht
- 13 a: strukturierte äußere Oberfläche
- 14: muldenartige Vertiefungen
- 15: erhöhte Bereiche

## Patentansprüche

1. Kunststoffrohr, insbesondere für eine grabenlose Verlegung im Erdreich, welches eine strukturierte äußere Oberfläche aufweist, **dadurch gekennzeichnet, dass** das Kunststoffrohr an seiner äußeren Oberfläche (13 a) den Reibungskoeffizienten verringernde Strukturelemente (14, 15) aufweist.

2. Kunststoffrohr nach Anspruch 1, **dadurch gekennzeichnet, dass** die Strukturelemente an der äußeren Oberfläche muldenartige Vertiefungen (14) umfassen.

3. Kunststoffrohr nach Anspruch 2, **dadurch gekennzeichnet, dass** die muldenartigen Vertiefungen (14) einen kreisförmigen oder polygonalen Umriss haben.

4. Kunststoffrohr nach Anspruch 2 oder 3, **dadurch gekennzeichnet, dass** dieses eine golfballartige Oberfläche mit Dellen (dimples) als Strukturelemente aufweist.

5. Kunststoffrohr nach einem der Ansprüche 1 bis 4, **dadurch gekennzeichnet, dass** dieses an der äußeren Oberfläche als Strukturelemente abgerundete, nicht scharfkantige Erhebungen aufweist.

6. Kunststoffrohr nach einem der Ansprüche 1 bis 5, **dadurch gekennzeichnet, dass** als Strukturelemente sowohl muldenartige Vertiefungen als auch abgerundete Erhebungen vorgesehen sind.

7. Kunststoffrohr nach einem der Ansprüche 1 bis 5, **dadurch gekennzeichnet, dass** die Oberfläche der Außenhaut des Kunststoffrohrs eine niedrigere Reibungszahl aufweist als eine glatte Kunststoffrohroberfläche aus dem gleichen Werkstoff.

8. Kunststoffrohr nach einem der Ansprüche 1 bis 7, **dadurch gekennzeichnet, dass** an der äußeren Oberfläche schuppenartige Strukturelemente vorgesehen sind.

9. Kunststoffrohr nach einem der Ansprüche 1 bis 8, **dadurch gekennzeichnet, dass** die äußere Oberfläche Längsrillen aufweist, bevorzugt Längsrillen im Bereich einer schuppenartigen Oberflächenstruktur.

10. Kunststoffrohr nach einem der Ansprüche 1 bis 9, **dadurch gekennzeichnet, dass** dieses eine glatte innere Oberfläche (11 a) aufweist.

11. Kunststoffrohr nach einem der Ansprüche 1 bis 10, **dadurch gekennzeichnet, dass** dieses wenigstens einen innen und außen glatten ein- oder mehrschichtigen Rohrkern (11) aus Kunststoff aufweist sowie eine äußere Mantelschicht (13), die an ihrer äußeren Oberfläche (13 a) die den Reibungskoeffizienten verringernden Strukturelemente (14, 15) aufweist.

12. Kunststoffrohr nach Anspruch 11, **dadurch gekennzeichnet, dass** die äußere Mantelschicht (13) auf den Rohrkern (11) aufextrudiert ist.

13. Kunststoffrohr nach einem der Ansprüche 1 bis 12, **dadurch gekennzeichnet, dass** dieses im Falle eines einschichtigen Kunststoffrohrs vollständig oder im Falle eines mehrschichtigen Kunststoffrohrs der Rohrkern (11) und/oder die äußere Mantelschicht (13) ganz oder teilweise aus Polyolefinen bestehen.
